Europäisches Patentamt

European Patent Office

Office européen des brevets

(11) Veröffentlichungsnummer: **0 205 863**
**A1**

(12) **EUROPÄISCHE PATENTANMELDUNG**

(21) Anmeldenummer: **86106363.4**

(22) Anmeldetag: **09.05.86**

(51) Int. Cl.⁴: **H 04 Q 11/04, H 04 N 7/13**

(30) Priorität: **05.06.85 DE 3520100**

(43) Veröffentlichungstag der Anmeldung: **30.12.86**
**Patentblatt 86/52**

(84) Benannte Vertragsstaaten: **AT CH DE FR IT LI NL SE**

(71) Anmelder: **ANT Nachrichtentechnik GmbH,**
**Gerberstrasse 33, D-7150 Backnang (DE)**

(72) Erfinder: **Hofmeister, Hagen, Dipl.-Ing., Neustädter**
**Strasse 34, D-7054 Korb (DE)**

(74) Vertreter: **Schickle, Gerhard, Dipl.-Ing., ANT**
**Nachrichtentechnik GmbH Patent- und Lizenzabteilung**
**Gerberstrasse 33, D-7150 Backnang (DE).**

(54) **Breitband-Verteil-Kommunikationssystem.**

(57) Die Erfindung betrifft ein Breitband-Verteil-Kommunikationssystem mit einigen Quellen ($Q_1$, $Q_2$) für eine erste Anzahl Breitbandsignale ($P_1...P_x$), welche mehreren Zentralen ($Z_1...Z_x$) zugeführt werden, wobei an jede Zentrale viele Teilnehmer ($T_1...T_y$) sternförmig über ihnen zugeordnete Anschlußleitungen ($Asl_1...Asl_y$) angeschlossen sind, wobei sich in jeder Zentrale ein Koppelfeld (KZ) befindet, an welches die erste Anzahl Breitbandsignale herangeführt sowie die Anschlußleitungen über ihnen zugeordnete Multiplexer angeschlossen sind, wobei über das Koppelfeld eine zweite Anzahl (n) aus der ersten Anzahl der Breitbandsignale an die Eingänge der Multiplexer durchschaltbar sind, wobei die zweite Anzahl der Breitbandsignale im Multiplexer zu einem Multiplexsignal zusammengefaßt wird, welches zu dem betr. Teinehmer übertragen wird, wo daraus die Breitbandsignale wiedergewonnen werden und an Wiedergabegeräten wiedergegeben werden. Als Breitbandsignale kommen Fernsehprogramme in Frage und als deren Quellen die Studios der Rundfunkanstalten und lokalen Programmanbieter. Als Wiedergabegeräte dienen die in den Wohnungen der Teilnehmer befindlichen Fernsehempfänger. Die Erfindung befaßt sich mit der digitalen Aufbereitung der Breitbandsignale in den Quellen und ihrer Übertragung als geschlossene Informationsblöcke bis zu den Wiedergabegeräten.

## Breitband-Verteil-Kommunikationssystem

Die Erfindung betrifft ein Breitband-Verteil-Kommunikationssystem nach dem Oberbegriff der Patentansprüche 1, 2, 3
oder 4. Ein solches System ist in der Zeitschrift "Nachrichtentechnische Berichte", herausgegeben von der ANT
Nachrichtentechnik GmbH, Backnang, Heft 1, Mai 1984, beschrieben.

Nach dem Aufsatz "Das BIGFON-Systemkonzept, Anforderungen
und Aufgabenstellung" dieser Zeitschrift stehen in einer
Zentrale als Breitbandsignale 12 Fernsehprogramme zur Verfügung, aus denen sich jeder der über Anschlußleitungen
sternförmig an die Zentrale angeschlossenen Teilnehmer drei
verschiedene Programme auswählen kann. Das heißt, die Anschlußleitung weist drei Fernseh-Breitband-Kanäle auf, und
beim Teilnehmer ist an jeden Kanal ein Fernsehempfänger
fest angeschlossen. In der Zentrale wird in einem Koppelfeld das jeweils gewünschte Fernsehprogramm zu einem der
drei Fernsehkanäle der Anschlußleitung durchgeschaltet. Zur
Übertragung dient ein digitales Zeitmultiplexverfahren mit
einer Bitrate von 68,736 MBit/s je Fernsehkanal. Es ist zusätzlich ein vierter Breitband-Kanal mit der gleichen Bitrate zur Übertragung von Tonrundfunkprogrammen und Schmalbanddiensten vorgesehen. In dem Aufsatz "Breitbandmultiplexeinrichtungen" der oben genannten Zeitschrift ist beschrieben, daß in diesem vierten Breitband-Kanal eine Synchronisationsinformation mit übertragen wird, welche teilnehmerseitig zum Demultiplexen aller vier Breitband-Kanäle benutzt wird.

Als Teilnehmer werden hier die Einrichtungen in einer
Wohnung angesehen. Obwohl das Multiplexsignal auf der Anschlußleitung eine Bitrate aufweist, mit der vier Fernsehprogramme gleichzeitig übertragen werden könnten, stehen den Bewohnern der betr. Wohnung nur drei verschiedene Fernsehprogramme zur Verfügung, weil der vierte Breitband-Kanal
wegen der in ihm enthaltenen Synchronisationsinformation
immer mitübertragen werden muß, auch wenn die in ihm übertragenen Schmalbanddienste und Tonrundfunkprogramme nicht
benötigt werden. Die Zahl der Fernsehempfänger in einer
Wohnung kann nicht größer sein als die Zahl der über die
Anschlußleitung gleichzeitig übertragbaren Fernseh-Kanäle.

Wenn an mehreren Fernsehempfängern in einer Wohnung das
gleiche Fernsehprogramm wiedergegeben werden soll, müssen
in der Zentrale entsprechend viele Kanäle durchgeschaltet
werden. Dies ist nachteilig, wenn die vom Teilnehmer zu
entrichtenden Gebühren sich nicht nach der Zahl der durchgeschalteten unterschiedlichen Fernsehkanäle sondern nur
nach ihrer Zahl, also einfach nach der Zahl der betätigten
Koppelpunkte im Breitband-Verteilkoppelfeld richtet.

Die das Breitband-Verteil-Kommunikationssystem betreibende
Fernmeldeverwaltung kann sich durch Registrieren der Koppelpunktdurchschaltungen ein Bild von den Benutzergewohnheiten
der Teilnehmer machen. Dies können manche Teilnehmer als
ein Eindringen in ihre Privatsphäre ansehen und deshalb
ablehnen.

Die 12 Fernsehprogramme werden erst in der Zentrale digital
und bitratengleich aufbereitet. Von den Quellen, d. h. von
den Studios der Rundfunkanstalten und der lokalen Programmanbieter werden sie in analoger Signalform bis zur Zentrale
übertragen. Dies ist bei dem in dieser Zeitschrift beschriebenen Versuchsbetrieb mit nur einer einzigen Zentrale
kein Nachteil. Soll ein solches System flächendeckend angewendet werden, muß man sich in jeder Fernsprechortsvermittlungsstelle eine solche Zentrale vorstellen. So ergibt sich
beim bekannten System ein großer Aufwand für die digitale
und bitratengleiche Aufbereitung.

Aufgabe der Erfindung ist es, ein Breitband-Verteil-Kommunikationssystem der obigen Art anzugeben, bei welchem die Bitrate auf der Anschlußleitung voll ausgenutzt werden kann zur Auswahl der in der Zentrale zur Verfügung stehenden Breitband-(Fernseh-) Programme, wobei die Zahl der Wiedergabegeräte (Fernsehempfänger) beim Teilnehmer größer sein kann als die Zahl der über die Anschlußleitung übertragbaren Breitbandkanäle. An den Fernsehgeräten soll eine freie Auswahl unter den über die Anschlußleitung übertragenen Fernsehpgrogrammen möglich sein.

Ferner soll der Aufwand für die digitale und bitratengleiche Aufbereitung der in den Studios zunächst in analoger Signalform anfallenden Fernsehsignale verringert werden.

Diese Aufgabe wird durch ein Breitband-Verteil-Kommunikationssystem nach dem kennzeichnenden Teil der Patentansprüche 1, 2, 3 oder 4 gelöst.

Die Erfindung wird an Hand von den in den Figuren 1 bis 12 dargestellen Ausführungsbeispielen erläutert, wobei die Figuren 1 bis 7 ein Beispiel gemäß den Patentansprüchen 1 und 3 betreffen. An Hand der Figuren 8 bis 10 werden Ausführungsbeispiele entsprechend den Patentansprüchen 2 und 4 beschrieben. Die Figuren 11 und 12 betreffen die Weiterbildung nach dem Patentanspruch 5.

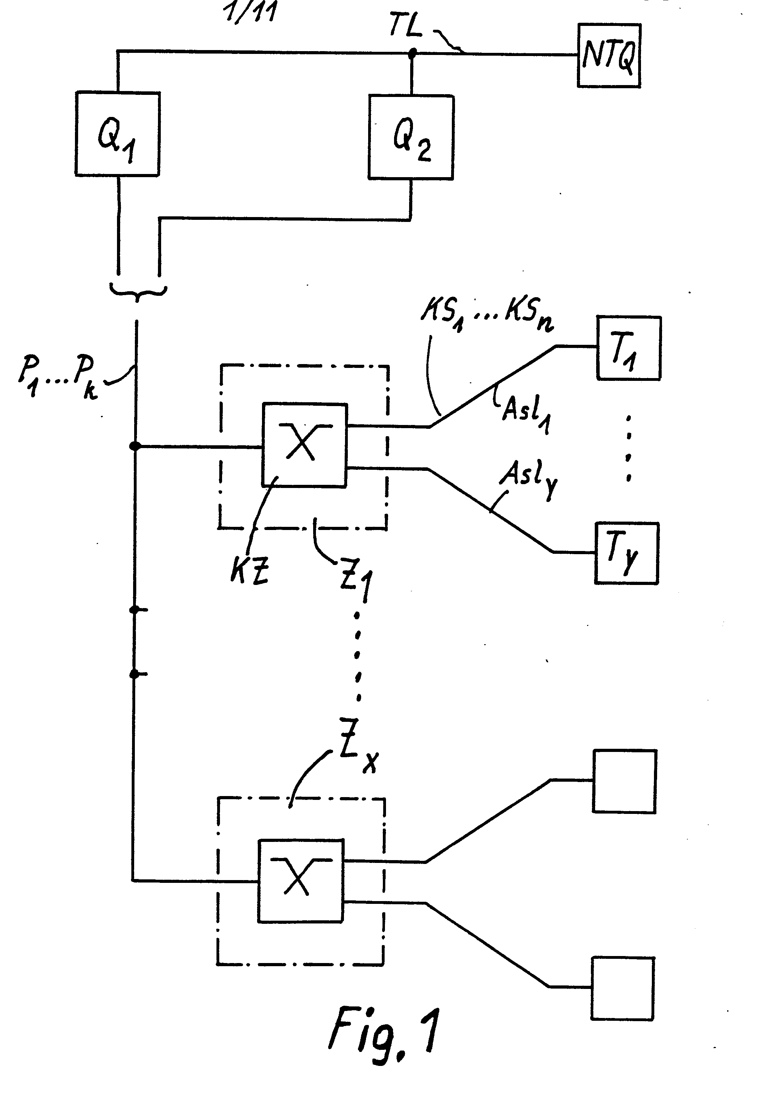

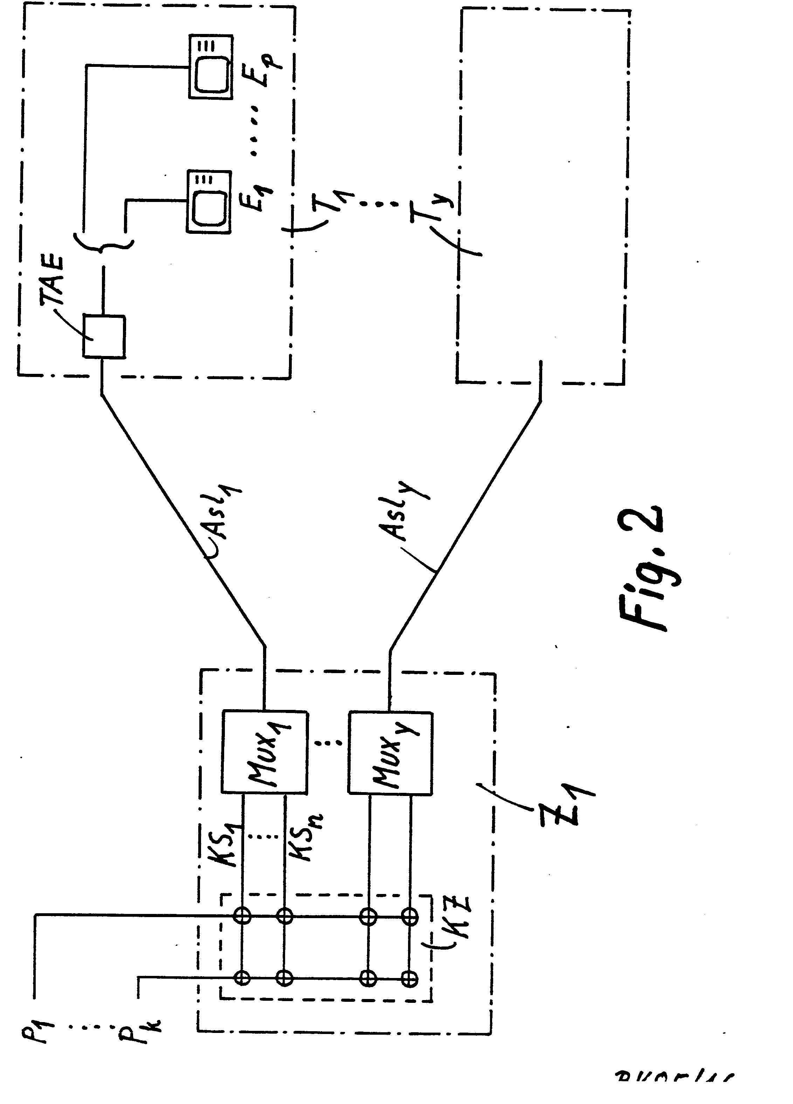

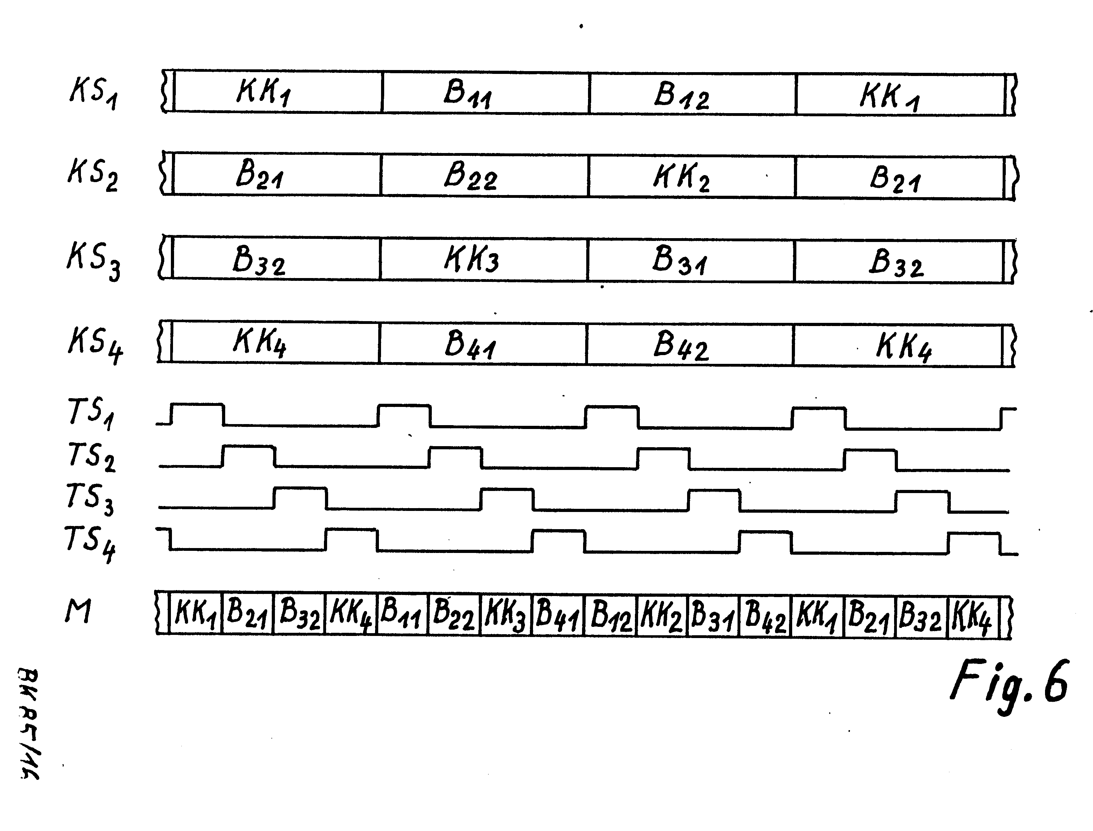

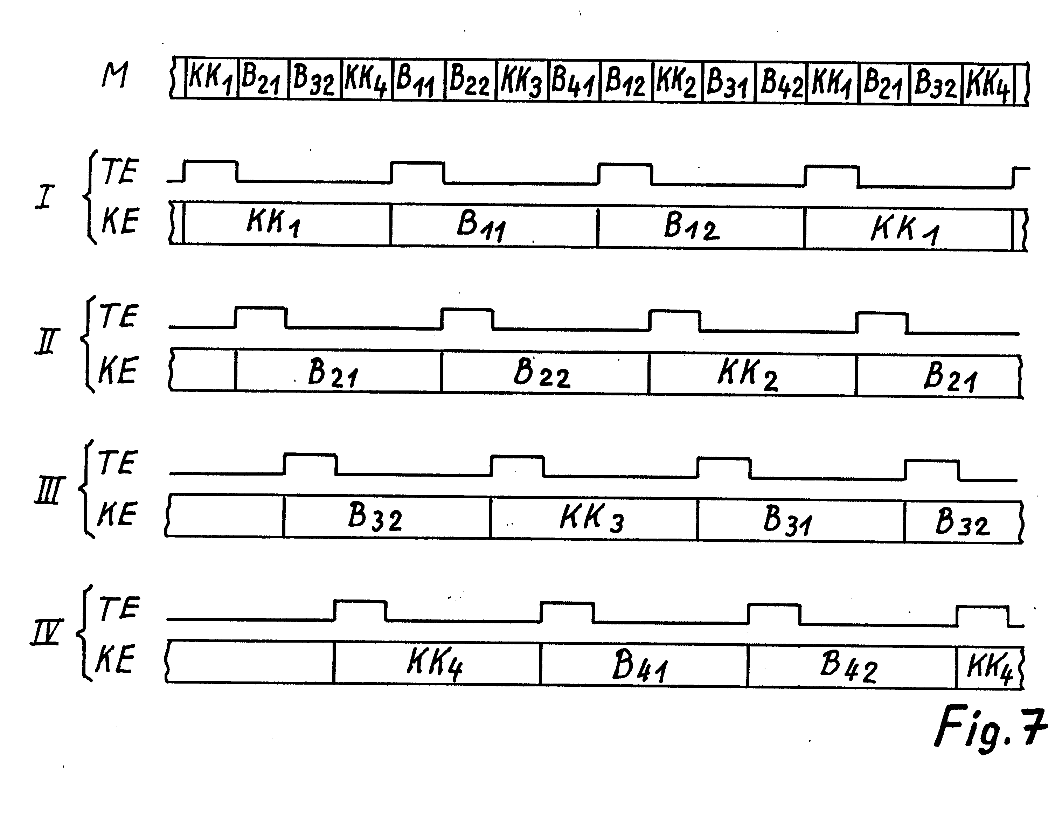

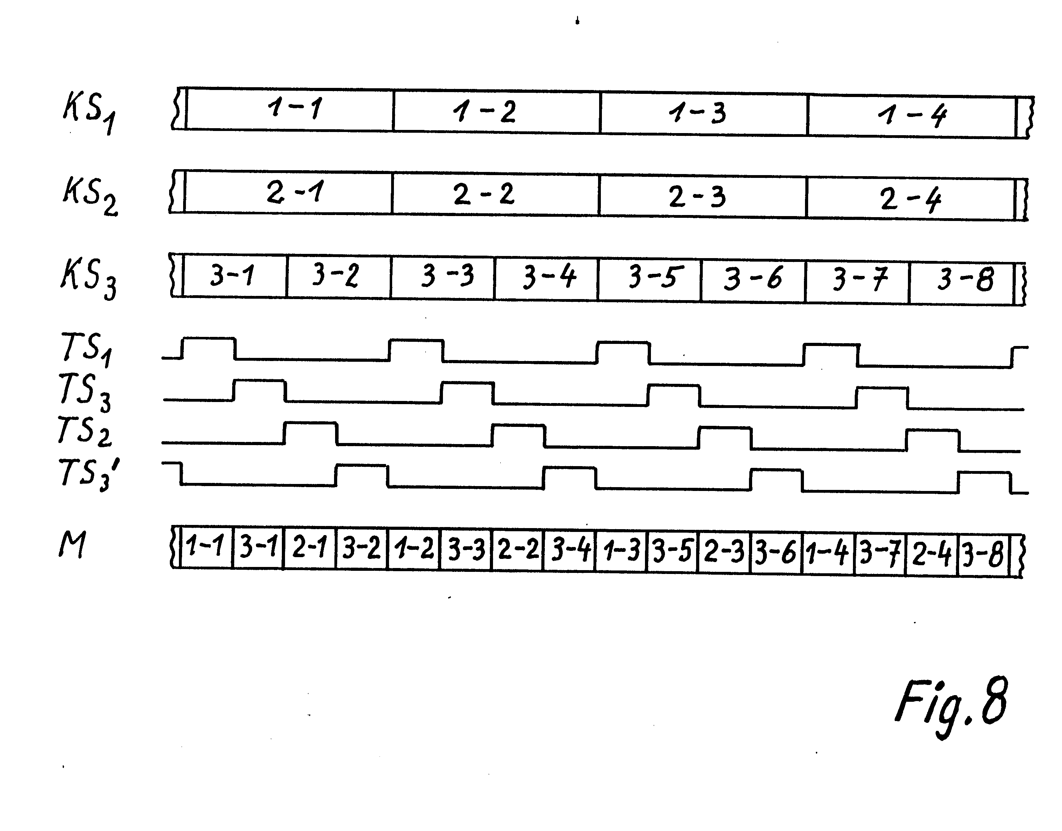

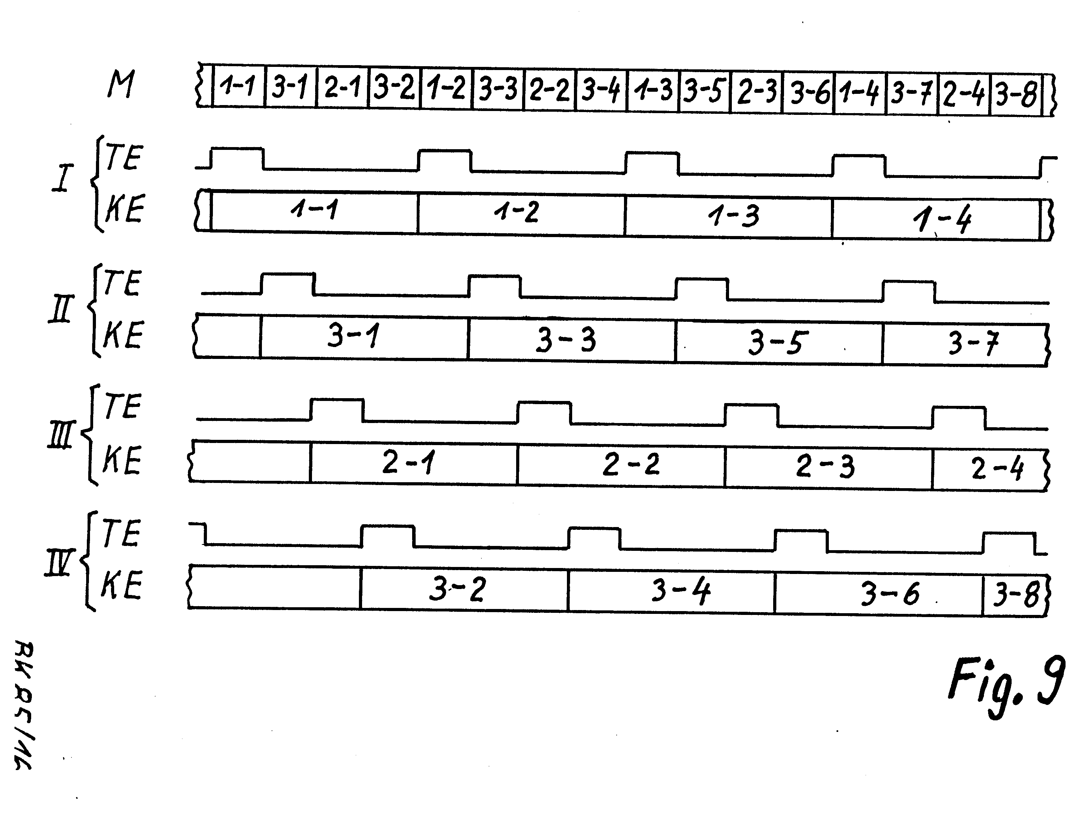

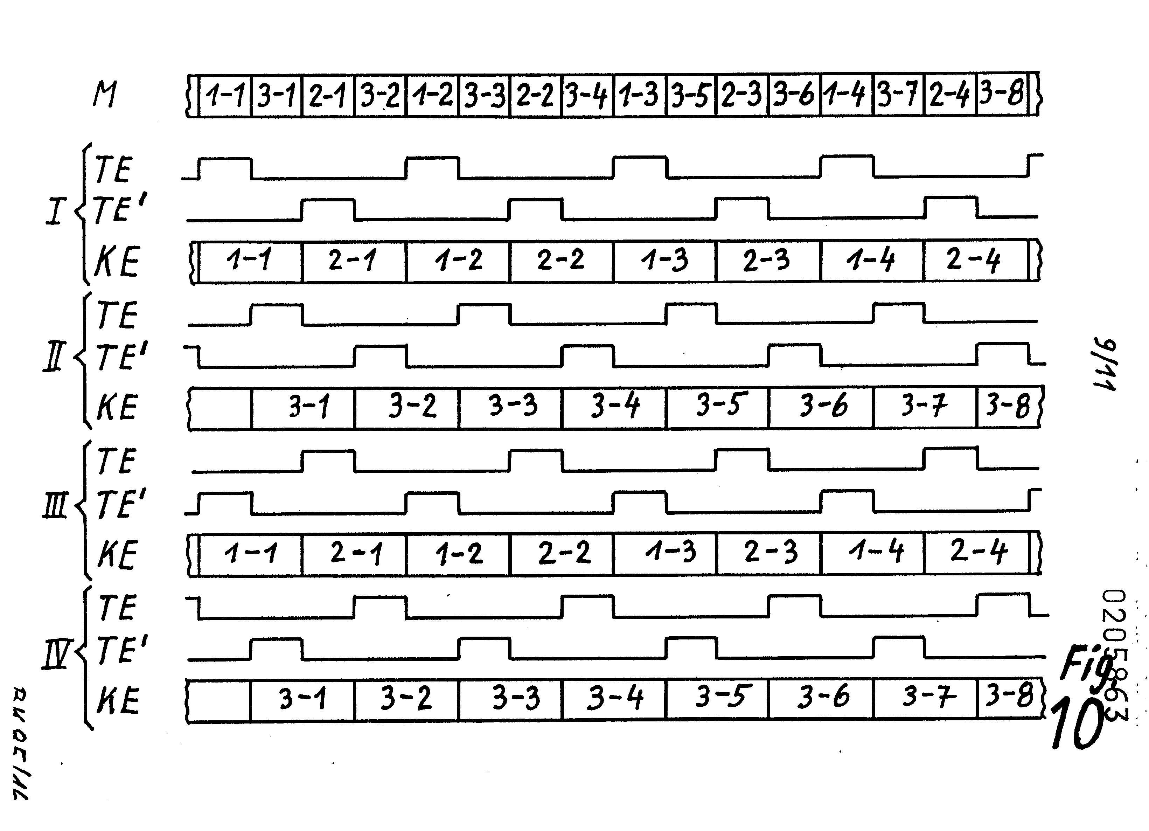

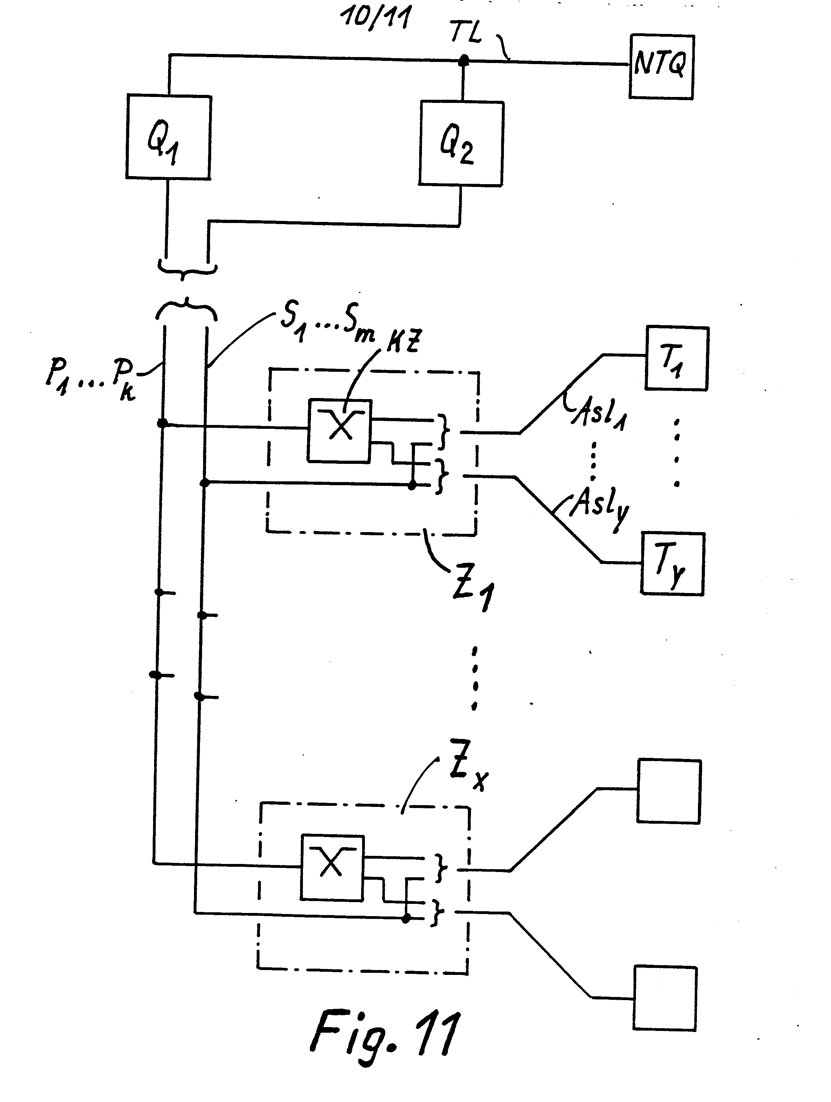

Es wird zunächst das Ausführungsbeispiel für den Patentanspruch 1 nach den Figuren 1 bis 7 beschrieben. Die Figur 1 gibt eine Übersicht über das erfindungsgemäße Breitband-Verteil-Kommunikationssystem, die Figuren 2 bis 5 geben Einzelheiten desselben wieder. An Hand der Figuren 6 und 7 wird die Funktion einzelner Baugruppen verdeutlicht.

Es bedeuten in der Figur 1:

$Q_1$:        eine erste Quelle für Breitbandsignale

$Q_2$:        eine zweite Quelle für Breitbandsignale

TL:        eine Taktleitung

NTQ:        eine Normtaktquelle

$P_1 \ldots P_k$:    eine erste Anzahl Fernsehprogramme als
        Breitbandsignale

$Z_1 \ldots Z_x$:    x Zentralen

KZ:    ein Koppelfeld in einer Zentrale

$T_1 \ldots T_y$:    y Teilnehmer

$Asl_1 \ldots Asl_y$: y Anschlußleitungen

In den Quellen $Q_1$ und $Q_2$ werden eine erste Anzahl k der
dort produzierten oder von außerhalb zugeführten Fernsehprogramme zu einer ersten Anzahl k digitalen Breitbandsignalen $P_1$ bis $P_k$ mit einheitlicher Bitrate und einheitlichem Rahmenaufbau aufbereitet. Jeder Rahmen weist
neben den Bits zur Übertragung des FBAS-Signales und des
zugehörigen Tones weitere Bits auf für eine bei allen Breitbandsignalen einheitliche Rahmenkennung sowie für eine für
jedes der Fernsehprogramme $P_1$ bis $P_k$ individuelle Kanalkennung. Diese liegt, bezogen auf die Rahmenkennung, immer
am gleichen Platz.

0205863
BK 85/16

Die Zahl der Quellen ist nicht auf zwei beschränkt, auch die Zuordnung der Breitbandsignale $P_1$ bis $P_k$ zu den Quellen ist beliebig. Im Extremfall ist für jedes der Breitbandsignale eine eigene Quelle vorgesehen. Als Quellen kann man die Studios der Rundfunkanstalten und die der lokalen Programmanbieter sowie Umsetzereinrichtungen von in anderer Form angelieferter Programme ansehen.

Die Aufbereitung auf gleiche Bitrate ist besonders einfach möglich, wenn eine für alle Quellen gemeinsame Normtaktquelle NTQ vorgesehen ist. Der in ihr erzeugte Normtakt wird über die Taktleitung TL an alle Quellen $Q_1$ und $Q_2$ übertragen, wo durch Vervielfachen und/oder Teilen und/oder Synchronisieren örtlicher Taktgeneratoren die zum Aufbereiten auf einheitliche Bitrate notwendigen synchronen Takte erzeugt werden.

Die Fernsehprogramme $P_1$ bis $P_k$ werden den Koppelfeldern KZ in den Zentralen $Z_1$ bis $Z_x$ zugeleitet, wobei für jedes Fernsehprogramm ein eigener physikalischer Leiter oder auch Multiplexausnutzung von wenigen Leitern vorgesehen sein kann. An jede Zentrale sind über Anschlußleitungen sternförmig viele Teilnehmer angeschlossenen, wobei jedem Teilnehmer nehmer eine eigene Anschlußleitung zugeordnet sind. Die Teilnehmer der Zentrale $Z_1$ sind mit $T_1$ bis $T_y$ und die zugeordneten Anschlußleitungen mit $Asl_1$ bis $Asl_y$ bezeichnet. Über jede Anschlußleitung können eine zweite Anzahl n verschiedene Breitbandkanäle $KS_1$ bis $KS_n$ übertragen werden, wobei die Zahl n kleiner ist als die erste Anzahl k. Die Anschlußleitungen sind an die Koppelfelder KZ angeschlossen. Je nach Wunsch des Teilnehmers wird ein Fernsehprogramm aus der ersten Anzahl k im Koppelfeld KZ zu einem der Kanäle $KS_1$ bis $KS_n$ durchgeschaltet und so dem Teilnehmer zugeleitet. Bemißt man z. B. k zu 12 und n zu 4, so kann man jedem Teilnehmer, d. h., jeder Wohnung vier aus zwölf Fernsehprogrammen zuleiten.

Das Übertragen dieser n Fernsehprogramme über die Anschlußleitung wird an Hand der Figur 2 näher erläutert. Das
Koppelfeld KZ ist mit einigen seiner Koppelpunkte dargestellt. Es weist für jeden Teilnehmer n Ausgänge auf, für
jeden der n Breitbandkanäle einen. Die dem Teilnehmer $T_1$
zugeordneten Ausgänge sind gleichlautend mit den über sie
übertragenen Kanäle mit $KS_1$ bis $KS_n$ bezeichnet.

Für jeden der Teilnehmer $T_1$ bis $T_y$ ist in der Zentrale $Z_1$
ein eigener Multiplexer $Mux_1$ bis $Mux_y$ vorgesehen. Die
jedem Teilnehmer zugeordneten n Ausgänge des Koppelfeldes
KZ sind mit den n Eingängen des jeweiligen Multiplexers
verbunden, wobei die Bezeichnung $KS_1$ bis $KS_n$ auch für
diese Eingänge gilt. Im Multiplexer wird aus den n Breitbandsignalen ein Multiplexsignal gebildet und über die
Anschlußleitung an den Teilnehmer übertragen.

Bei jedem Teilnehmer befinden sich eine Teilnehmeranschalteeinheit TAE, in der Figur 2 nicht gezeichnete  Demultiplexer und p Fernsehempfänger $E_1$ bis $E_p$, wobei die Zahl
p der Fernsehempfänger größer ist als die Zahl n der Breitbandkanäle.

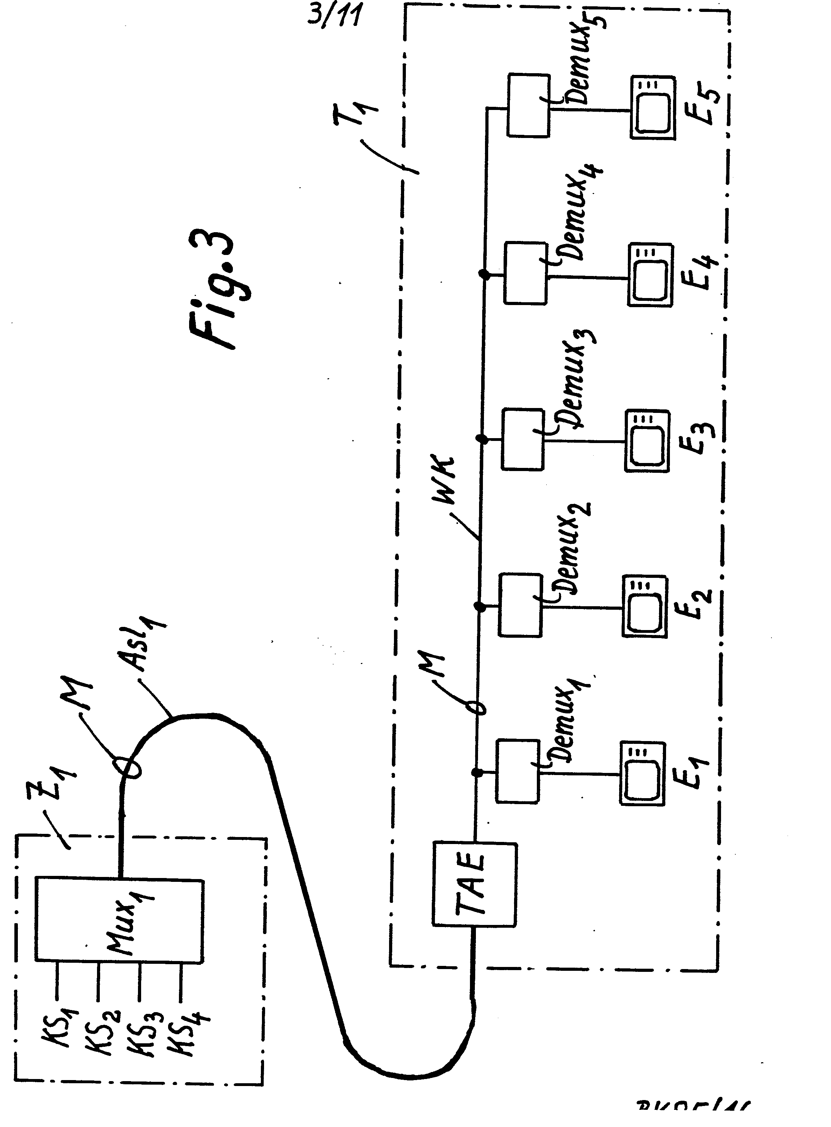

Weitere Einzelheiten werden an Hand der Figur 3 erläutert.
In ihr ist oben links der dem Teilnehmer $T_1$ zugeordnete
Multiplexer $Mux_1$ mit seinen Eingängen $KS_1$ bis $KS_4$ dargestellt, das heißt, die zuvor noch mit n als unbestimmt
angenommene Zahl der Breitbandkanäle wird hier konkret
mit 4 angesetzt. Auch die Zahl p der Fernsehempfänger
$E_1$ bis $E_5$ ist hier mit 5 angenommen. Jedem Fernsehempfänger
ist einer der Demultiplexer Demux $_1$ bis $Demux_5$ vorgeschaltet, welche über die Wohnungsverkabelung WK mit der Teilnehmeranschalteeinheit TAE verbunden sind.

Im Multiplexer $Mux_1$ wird aus den an seinen Eingängen $KS_1$ bis
$KS_4$ anliegenden Breitbandsignalen ein Multiplexsignal
M gebildet, welches über die Anschlußleitung $Asl_1$ zur Teilnehmeranschalteeinheit TAE übertragen wird. In ihr wird das
Multiplexsignal auf eine zur Übertragung auf der Wohnungsverkabelung zu den Demultiplexern $Demux_1$ bis $Demux_5$ geeignete
Signalform umgesetzt.

In jedem der Demultiplexer $Demux_1$ bis $Demux_5$ wird aus dem
Multiplexsignal M dasjenige Breitbandsignal gewonnen, welches dem an dem betr. Fernsehempfänger gewünschten Programm
entspricht. Da über die Anschlußleitung nur vier verschiedene Fernsehprogramme übertragen werden können, können an
den fünf Fernsehempfängern auch nur vier verschiedene Programme wiedergegeben werden, d. h., mindestens zwei Fernsehempfänger zeigen das gleiche Programm.

Die Wohnungsverkabelung Wk kann verschieden ausgeführt sein:

    a) Sammelschienenförmig, wie in der Figur 3 dargestellt,

    b) Sternförmig

    c) in einer Mischform aus a) und b)

Die Demultiplexer $Demux_1$ bis $Demux_5$ befinden sich in der
Nähe der betr. Fernsehempfänger, z. B. in einer Anschlußdose. Bei sternförmiger Wohnungsverkabelung können die
Demultiplexer auch in der Teilnehmeranschalteeinheit TAE
untergebracht sein, dies gilt auch für die Mischform nach c).
Bei der Form nach a) und c) können von der Teilnehmeranschalteeinheit TAE mehrere Sammelschienen ausgehen. Welche
Verkabelungsform gewählt wird, richtet sich bei gegebenem
Wohnungsgrundriß nach wirtschaftlichen Gesichtspunkten,
insbesondere, um kurze Kabellängen zu erreichen. Zwecks
leichter Montage und geringer Lagerhaltung sind die Teilnehmeranschalteeinheiten so ausgestaltet, daß sie leicht an
jede der möglichen Form der Wohnungsverkabelung angepaßt werden können.

Um das Wiedergewinnen des jeweils gewünschten Breitbandkanals
in einem der Demultiplexer erläutern zu können, muß zuvor
die Multiplexbildung in den zentralenseitigen Multiplexern
erklärt werden. Dies geschieht an Hand der Figur 6. In ihr
sind in den Zeilen $KS_1$ bis $KS_4$ Ausschnitte von je 4 Bits
der an den gleichnamigen Eingängen des Multiplexers $Mux_1$ der
Figur 3 anliegenden bitratengleichen und bitflankensynchronen
Breitbandsignale gezeichnet. Sie gelangen von den Quellen
$Q_1$ bzw. $Q_2$ als geschlossene Informationsblöcke bis hierher,
d. h., in demjenigen Rahmenaufbau, wie sie in den Quellen
$Q_1$ bzw. $Q_2$ aufbereitet werden, also mit Rahmen- und Kanalkennung sowie FBAS-Signal und Fernsehton ohne jede weiteren
Zusätze.

Mit KK... sind die die Kanalkennung und mit B... die das
FBAS-Signal bzw. den Fernsehton tragenden Bits bezeichnet.
Indizes geben die Zugehörigkeit zu den einzelnen Kanälen
und bei den mit B bezeichneten Bits auch noch ihre Reihenfolge untereinander an. Auf die Darstellung von Rahmenkennungsbits wurde verzichtet. Die Phasenlage von signifikanten Bits (Rahmenkennungs- und Kanalkennungsbits) eines
Breitbandsignals zu denjenigen jedes anderen Breitbandsignals
ist beliebig.

Im Multiplexer $Mux_1$ werden diese vier Breitbandsignale bitweise verschachtelt ohne daß eine Überrahmenkennung hinzugefügt wird. Das so gewonnene und mit M bezeichnete Multiplexsignal weist also genau die vierfache Bitrate der einzelnen Breitbandsignale auf. Ein solcher Multiplexer ist im
Prinzip aus mehreren, von untereinander phasenverschobenen
und gegenüber den zu verschachtelnden Signalen flankensynchronen Takten durchlässig gesteuerte Torschaltungen aufgebaut.

Da hier vier Breitbandsignale vorliegen, sind dementsprechend vier Takte $TS_1$ bis $TS_4$ vorgesehen, wobei durch die Indizes ihre Zuordnung zu den Breitbandsignalen $KS_1$ bis $KS_4$ angegeben ist. Die einzelnen Bits im Multiplexsignal M sind gleichlautend mit denen der einzelnen Breitbandsignale bezeichnet. So ist zu erkennen, in welcher Reihenfolge, durch die positiven Impulse der Takte gesteuert, die einzelnen Bits der Breitbandsignale zu dem Multiplexsignal zusammengefügt werden.

Die vier Takte $TS_1$ bis $TS_4$ werden in nicht dargestellter Weise aus den an den Eingängen $KS_1$ bis $KS_4$ anliegenden Breitbandsignalen gewonnen, wodurch der geforderte Bitflankensynchronismus leicht herstellbar ist. Die vier Takte müssen untereinander die in der Figur 6 angegebene Phasenlage aufweisen, eine bestimmte Phasenlage gegenüber signifikanten Bits der Breitbandsignale wird nicht gefordert.

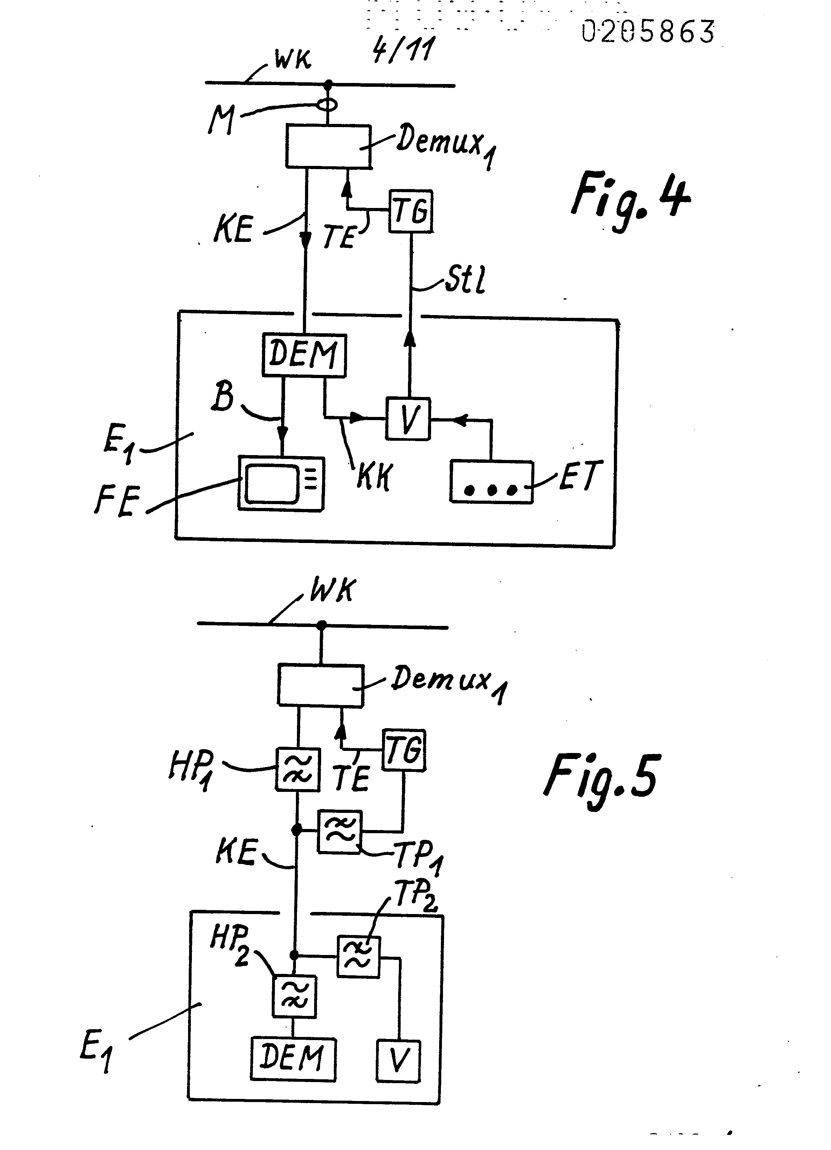

Wie teilnehmerseitig aus diesem Multiplexsignal M das dem gewünschten Fernsehprogramm entsprechende Breitbandsignal gewonnen wird, sei an Hand der Figuren 4 und 7 beschrieben.

In der Figur 4 ist einer der Demultiplexer, hier $Demux_1$ gezeichnet. Er enthält einen hier separat gezeichneten Taktgenerator TG, welcher einen zum Multiplexsignal M bitflankensynchrone Empfangstakt TE aus diesem Multiplexsignal erzeugt. Auch ein Demultiplexer ist im Prinzip aus von Takten gesteuerten Torschaltungen aufgebaut. Da hier nur eines der Breitbandsignale gewonnen werden soll, genügt eine Torschaltung und ein Empfangstakt TE.

In der Figur 7 ist zunächst wieder das gemäß der Figur 6 gewonnene Multiplexsignal M dargestellt. Zu diesem kann der Empfangstakt TE zunächst jede beliebige Phasenlage aufweisen. Da zentralenseitig vier Takte mit vier verschiedenen Phasenlagen vorhanden sind, sind auch teilnehmerseitig vier verschiedene Phasenlagen interessant. Diese sind in der Figur 7 unter I bis IV mit TE bezeichnet. Mit KE sind die bei der jeweiligen Phasenlage des Empfangstaktes TE am Ausgang des Demultiplexers für die Leitung KE erscheinenden Bitfolgen bezeichnet. Durch gleichlautende Bezeichnung der einzelnen Bits und Vergleich mit der Figur 6 erkennt man, daß je nach der Phasenlage des Empfangstaktes TE eines der an den Eingängen $KS_1$ bis $KS_4$ des Multiplexers $Mux_1$ anliegenden Breitbandsignale erscheint.

Das jeweils so gewonnene Breitbandsignal wird über die Leitung KE dem Demodulator DEM zugeleitet. Da auch vom Multiplexer $Mux_1$ bis zum Ausgang des Demultiplexers $Demux_1$ keinerlei Bit hinzugefügt oder weggelassen wurden, reicht die Übertragung der Breitbandsignale als geschlossene Informationsblöcke von der jeweiligen Quelle $Q_1$ bzw. $Q_2$ bis zum Eingang des Demodulators DEM, welcher daraus durch Auswerten der Rahmenkennung die Kanalkennung KK extrahiert und das FBAS-Signal B sowie den Fernsehton dem eigentlichen Fernsehgerät FE zuleitet. Die so empfangene Kanalkennung KK und eine an einer Eingabetastatur ET eingegebene Kennung eines der aus den angebotenen Fernsehprogrammen $P_1$ bis $P_k$ (siehe Figur 1) ausgewählten Fernsehprogrammes werden einem Vergleicher V zugeführt. Bei zufälliger Übereinstimmung geschieht weiter nichts. Bei Nichtübereinstimmung gibt der Vergleicher V über die Steuerleitung Stl ein Steuersignal an den Taktgenerator TG, welcher dadurch um die Dauer einer Bitlänge des Multiplexsignals M angehalten wird. So wird erreicht, daß der Empfangstakt TE die nächste der möglichen Phasenlagen bezüglich des Multiplexsignals M annimmt und das entsprechende gewonnene Breitbandsignal zum Demodulator DEM gelangt. Dieses Anhalten geschieht so oft bis Übereinstimmung zwischen der empfangenen und der eingegebenen Kanalkennung erreicht ist.

An Hand der Figur 5 wird beschrieben, wie die lt. Figur 4 vorgesehene Steuerleitung Stl zwischen dem Vergleicher V und dem Taktgenerator TG eingespart werden kann, indem die Leitung KE zusätzlich zur Übertragung des Steuersignales vom Vergleicher V zum Taktgenerator TG benutzt wird. Dies geschieht, indem als Steuersignal ein Wechselstromimpuls mit einer Frequenz unterhalb der niedrigsten Frequenz des Breitbandsignals oder ein Gleichstromimpuls gewählt wird und beide Signale durch die Hochpässe $HP_1$ und $HP_2$ sowie die Tiefpässe $TP_1$ und $TP_2$ zusammengefaßt bzw. wieder getrennt werden.

Der Demodulator DEM, der Vergleicher V und die Eingabetastatur ET befinden sich im eigentlichen Fernsehgerät FE oder in dessen Nähe, was durch die gemeinsame Umrahmung angedeutet wird. Durch die Bezeichnung dieses Blockes mit $E_1$ wird verdeutlicht, das er den in den Figuren 2 und 3 dargestellten Fernsehempfängern $E_1$ ent-spricht.

In nicht dargestellter Weise wird über einen Rückkanal erreicht, daß gemäß der eingegebenen Kennung im zentralenseitigen Koppelfeld KZ der entsprechende Koppelpunkt durchgeschaltet und so das gewünschte Fernsehprogramm an einen der noch freien Eingänge $KS_1$ bis $KS_n$ des Multi-plexers $Mux_1$ gelegt wird. Wird dieses gewünschte Fernsehprogramm aber schon an einem anderen Fernsehempfänger desselben Teilnehmers empfangen, wird kein weiterer Koppelpunkt durchgeschaltet, sondern es findet nur noch das entsprechende, zuvor beschriebene Einphasen des Empfangstaktes TE statt.

Durch die individuelle Zuordnung der Demultiplexer zu den
Fernsehempfängern, die erfindungsgemäße Ausgestaltung der
Demultiplexer sowie ihre Kopplung mit den Vergleichern und
Eingabetastaturen wird erreicht, daß die Zahl der Fernsehempfänger unabhängig von der Zahl der über die Anschlußleitung übertragbaren Fernsehprogramme bemessen und nachträglich leicht geändert werden kann.

Durch Registrieren der Koppelfelddurchschaltungen kann
hier auch noch ein Bild über die Benutzergewohnheiten
gewonnen werden. Dieses Bild ist aber gebenüber dem
beim bekannten Stand der Technik möglichen nicht so
detailliert, da zentralenseitig nicht erkennbar ist,
an welchem der Fernsehempfänger das jeweils durchgeschaltete Fernsehprogramm wiedergegeben wird.

Auch hinsichtlich der Gebührenberechnung ist das erfindungsdungsgemäße System gegenüber dem bekannten vorteilhafter, wenn die Gebühr sich nach der Zahl der durchgeschalteten Koppelpunkte richtet und an mehreren Fernsehgeräten desselben
Teilnehmers das gleiche Fernsehprogramm wiedergegeben wird.

Das erfindungsgemäße System zeichnet sich durch eine einfache Taktversorgung aus. Nur die wenigen Quellen für die
Fernsehprogramme müssen mit untereinander synchronen Takten
versorgt werden, was die in der Figur 1 mit TL bezeichnete
Taktleitung erfordert. Die Takte brauchen untereinander nur
synchron zu sein, eine bestimmte Phasenlage zueinander wird
nicht gefordert, weil bei den an den Eingängen der Multiplexer in den Zentralen anliegenden Breitbandsignalen auch
keine bestimmmte Phasenlage untereinander gefordert wird.
So bestehen auch keine Forderungen hinsichtlich Laufzeiten
auf den Taktleitungen.

Da die in den in größerer Zahl vorhandenen Zentralen $Z_1$ bis
$Z_x$ und in den sehr vielen Demultiplexern vorgesehenen Taktgeneratoren nicht in einer bestimmten Phasenlage untereinander und in Beziehung zu signifikanten Bits der Breitbandsignalen laufen müssen, sind Synchronisierleitungen zu
diesen Taktgeneratoren hin entbehrlich. Sie können vielmehr
in einfacher Weise auf die jeweils vorhandenen Breitbandsignale synchronisiert werden.

Eine eigene Normtaktquelle kann entfalten, wenn ein schon
vorhandenes, für die Versorgung anderer digitaler Fernmeldesysteme vorgesehenes Netz zur Verteilung eines Normtaktes
mitbenutzt wird. Wie im Taschenbuch der Fernmeldepraxis
1984, Fachverlag Schiele und Schön, Berlin auf den Seiten 70
bis 104 in dem Aufsatz "Synchronisierung des digitalen Fernmeldenetzes der DBP" beschrieben ist, haben die Post- und
Fernmeldeverwaltungen solche Netze aufgebaut, wobei die
Deutsche Bundespost sich für einen Normtakt von 2048 kHz
entschlossen hat.

Einfache Taktgeneratoren in den Quellen $Q_1$ bzw. $Q_2$ ergeben
sich, wenn man die Bitraten der Breitbandsignale als ganzzahlige Vielfache dieses Normtaktes wählt. So kommt man z.B.
bei einer Versiebzehnfachung auf eine Bitrate von 34,816
Mbit/s. Ob man diese oder die doppelte (69,632 Mbit/s) oder
die vierfache (139,264 Mbit/s) Bitrate für die Breitbandsignale wählt, hängt davon ab, wie hoch man den Aufwand für
die Redundanzverminderung und die damit verbundene Bandbreitenverminderung des Bildsignals treibt. In diese Betrachtung
geht auch ein, für welche Bitrate sich die vielen Anschlußleitungen, sendeseitigen Multiplexer und teilnehmerseitigen
Demultiplexer wirtschaftlich herstellen lassen.

In dem zuvor beschriebenen, den Anspruch 1 betreffenden
Beispiel weisen die Breitbandsignale alle die gleiche
Bitrate auf. Demgegenüber weisen in dem System nach dem
Patentanspruch 2 die Breitbandsignale unterschiedliche
Bitraten auf, wobei die höheren Bitraten ganzzahlige
Vielfache der geringsten Bitrate sind.

Dadurch wird erreicht:

- Es ist nicht notwendig, wie beim bekannten System zur
  Übertragung der Schmalbanddienste und Tonrundfunkprogramme einen weiteren Breitbandkanal vorzusehen,
  der auch bei voller Ausnutzung der über ihn übertragenen
  Dienste nur schlecht ausgenutzt ist. Vielmehr können für
  solche Dienste Kanäle mit einer ihrer Bandbreite angepaßten Bitrate vorgesehen werden, wodurch die Bitrate
  des Multiplexsignals M nicht höher wird als notwendig.

- Wenn man für die jetzt üblichen Fernsehprogramme mit
  625 Zeilen pro Bild eine Bitrate von z.B. 34,816 Mbit/s
  festlegt, kann man leicht hochzeilige Fernsehprogramme
  mit entsprechend höherer Bildqualität einführen und dafür z. B. die doppelte Bitrate festlegen.

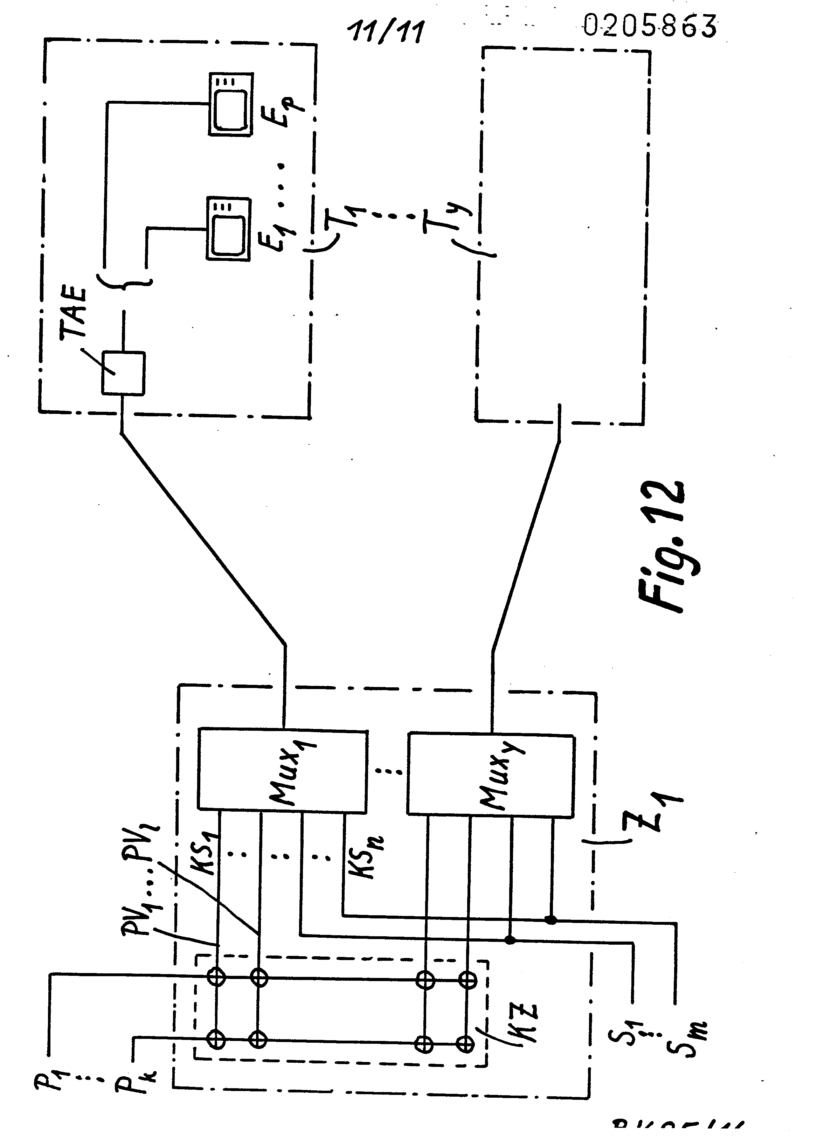

Ein entsprechendes Ausführungsbeispiel unterscheidet sich von dem zuvor beschriebenen durch die Bildung des Multiplexsignals, so daß die Figuren 1 bis 5 und der zugehörige Text sinngemäß auch hier gelten. Dieser Unterschied wird an Hand der Figuren 8 bis 10 erläutert, wobei die Figur 8 das Bilden des Multiplexsignals M in einem der zentralenseitigen Multiplexer betrifft. Im Gegensatz zur Figur 6 ist hier aus Gründen der einfacheren Darstellung angenommen, daß der Multiplexer nur die drei Eingänge $KS_1$ bis $KS_3$ aufweist, wobei die Eingänge $KS_1$ sowie $KS_2$ für die niedrige Bitrate und der Eingang $KS_3$ für die doppelte Bitrate bestimmt ist. Die Multiplexbildung geschieht auch wieder durch mehrere untereinander phasenverschobene Takte $TS_1$, $TS_2$, $TS_3$ und $TS_3'$, wobei die Takte $TS_1$ und $TS_2$ den Eingängen $KS_1$ bzw. $KS_2$ zugeordnet sind. Dem Eingang $KS_3$ sind die beiden Takte $TS_3$ und $TS_3'$, zugeordnet, wobei ihre Phasenlage gegenüber dem Breitbandsignal so gewählt ist, daß jeder positiver Taktimpuls ein anderes Bit dieses Breitbandsignales abtastet. Wie im Fall der Figur 6 müssen auch hier die Breitbandsignale bitflankensynchron sein; eine bestimmte Phasenlage ihrer signifikanten Bits zueinander wird auch hier nicht gefordert. Deshalb wurden hier die Kanalkennungsbits nicht eigens bezeichnet. Die Bezeichnung der einzelnen Bits gibt jetzt nur noch an, welchem der Eingänge $KS_1$ bis $KS_3$ sie zugeordnet sind und das wievielte Bit es in dem kurzen, hier betrachteten Ausschnitt des betr. Breitbandsignals ist.

An Hand der Figur 9 wird das Wiedergewinnen eines Breitbandsignals mit der geringen Bitrate in einem dafür gestalteten teilnehmerseitigen Demultiplexer erklärt. Es gilt hier sinngemäß der Text zur Figur 7. Bei zwei der möglichen Phasenlagen des Empfangstaktes TE, nämlich bei der unter I und III angegebenen, wird jeweils eines der Breitbandsignale wiedergewonnen. Dagegen erscheinen bei den anderen zwei möglichen Phasenlagen unbrauchbare Teile des Breitbandsignals mit der hohen Bitrate.

An Hand der Figur 10 wird das Wiedergewinnen des Breitbandsignals mit der hohen Bitrate beschrieben. Auch hier gilt sinngemäß der Text zur Figur 7; da aber zentralenseitig zwei Takte notwendig sind, müssen in dem für das Breitbandsignal hoher Bitrate bemessenen Demultiplexer zwei Empfangstakte TE und TE' mit der gleichen Phasenlage untereinander vorgesehen werden. Es ergeben sich wieder vier verschiedene mögliche Phasenlage dieser zwei Empfangstakte TE und TE' gegenüber dem Multiplexsignal M; bei zweien, nämlich den unter II und IV angegebenen, wird das Breitbandsignal hoher Bitrate richtig wiedergewonnen, bei den beiden anderen Möglichkeiten erscheint eine unbrauchbare Bitfolge aus den Breitbandsignalen niedriger Bitrate.

Die Auswahl des gewünschten Breitbandsignals, wenn mehrere solcher mit hoher Bitrate vorgesehen sind auch bei diesen, geschieht wie bei dem ersten Ausführungsbeispiel, d. h. wie an Hand der Figuren 4 und 5 beschrieben.

Durch die Beschränkung auf ganzzahlige Vielfache bei den Breitbandsignalen hoher Bitrate wird ein ähnlich einfacher Aufbau der Multiplexer und Demultiplexer ermöglicht wie bei den Systemen mit gleicher Bitrate aller Breitbandsignale. Man braucht nur die Bits des Multiplexsignals M im Verhältnis der Bitraten der Breitbandsignale diesen zuzuordnen, d. h., dem mit der niedrigsten Bitrate wird ein Bit, dem mit der dopppelten Bitrate werden zwei Bits, dem mit der drei-fachen Bitrate werden drei Bits aus einer Periode des Multiplexsignals zugeordnet.

Die Systeme nach den Ansprüchen 3 und 4 unterscheiden sich von denen nach den Ansprüchen 1 und 2 dadurch, daß zur Bildung des Multiplexsignals M anstelle der bitweisen Verschachtelung eine wortweise Verschachtelung angewendet wird, wobei bei dem System nach dem Anspruch 3 wie bei dem nach dem Anspruch 1 die Breitbandsignale gleiche Bitrate aufweisen, bei dem System nach Anspruch 4 wie bei dem nach Anspruch 2 jedoch unterschiedliche Bitraten angewendet werden.

Die Ausführungsbeispiele zu den Ansprüchen 1 und 2 dienen also sinngemäß auch zur Erläuterung der Systeme nach den Ansprüchen 3 und 4, man braucht nur in den in den Figuren 6 bis 10 gezeichneten Blöcken keine einzelnen Bits sondern aus mehrere Bits bestehende Datenwörter zu sehen.

Wortweise Verschachtelung hat gegenüber der bitweisen den Vorteil, daß im Demodulator DEM (Fig. 4) die Rahmenkennung schneller erkannt, die Kanalkennung schneller extrahiert und damit das gewünschte Fernsehprogramm schneller durchgeschaltet wird. Dagegen hat die bitweise Verschachtelung den Vorteil, daß sich im Multiplexer und Demultiplexer Bitströme mit hoher Bitrate leichter handhaben lassen.

Die Weiterbildung nach dem Patentanspruch 5 wird an Hand der Figuren 11 und 12 beschrieben. Die Teilnehmer haben zusätzlich zu den über die Koppelfelder KZ verteilvermittelten k Fernsehprogrammen $P_1$ bis $P_k$ noch die Auswahl zwischen einer dritten Anzahl m weiterer Fernsehprogrammen $S_1$ bis $S_m$. Diese werden nicht über die Koppelfelder vermittelt sondern über unmittelbare Verbindungen von den Quellen $Q_1$ und $Q_2$, wie in der Figur 12 dargestellt, unter Umgehung der Koppelfelder KZ den Eingängen $KS_i$ der Multiplexer $M_1$ bis $M_y$ und damit auch den Teilnehmern $T_1$ bis $T_y$ zugeleitet. Die Eingänge $KS_1$ bis $KS_n$ sind also zum Teil mit den verteilvermittelten Programmen $PV_1$ bis $PV_1$ und

zum anderen Teil mit den nur verteilten Programmen $S_1$ bis $S_m$ beschaltet. Für die letzteren sieht man zweckmäßiger Weise die am häufigsten ausgewählten Programme vor, z.B. die der Rundfunkanstalten. Als die verteilvermittelten Programme kämen die der lokalen Programmanbieter sowie Bildfernsprechsignale in Frage. Unter der Voraussetzung, daß die Zahl der verteilvermittelten und der nur verteilten Programme gleich der verteilvermittelten Programme $P_1$ bis $P_k$ in den Systemen nach den Ansprüchen 1 bis 4 ist, weist demgegenüber das System nach dem Anspruch 5 folgende Vorteile auf:

- kleinere Koppelfelder,

- weniger Datenfluß auf dem Rückkanal,

- weniger Möglichkeiten, die Benutzergewohnheiten zu registrieren.


- - - - -

- 19-

ANT Nachrichtentechnik GmbH          E7/Mlg/mü
Gerberstraße 33                      BK 85/16
D-7150 Backnang


Patentansprüche


1. Breitband-Verteil-Kommunikationssystem mit einigen Quellen
   ($Q_1$, $Q_2$, Fig. 1) für eine erste Anzahl Breitbandsignale
   ($P_1...P_k$), welche mehreren Zentralen ($Z_1...Z_x$) zugeführt
   werden, wobei an jede Zentrale viele Teilnehmer ($T_1...T_y$)
   sternförmig über ihnen zugeordnete Anschlußleitungen ($Asl_1...$
   $Asl_y$) angeschlossen sind, wobei sich in jeder Zentrale ein
   Koppelfeld (KZ) befindet, an welches die erste Anzahl Breitbandsignale nach digitaler bitratengleicher Aufbereitung
   herangeführt sowie die Anschlußleitungen über ihnen zugeordnete Multiplexer ($Mux_1 ... Mux_y$, Fig. 2) angeschlossen
   sind, wobei über das Koppelfeld eine zweite Anzahl (n) aus
   der ersten Anzahl der Breitbandsignale an die Eingänge
   ($KS_1...KS_n$) der Multiplexer durchschaltbar sind, wobei
   die zweite Anzahl der Breitbandsignale im Multiplexer durch
   bitweise Verschachtelung zu einem Multiplexsignal (M,
   Fig. 3) zusammengefaßt wird, welches über die betr. Anschlußleitung zu dem betr. Teilnehmer übertragen wird, wo
   daraus die Breitbandsignale wiedergewonnen werden und an
   Wiedergabegeräten wiedergegeben werden, dadurch gekennzeichnet, daß die digitale bitratengleiche Aufbereitung
   in den Quellen ($Q_1$, $Q_2$, Fig. 1) geschieht, daß dabei jedes
   Breitbandsignal ($P_1...P_k$) mit einer für alle Breitbandsignale gleiche Rahmenkennung und mit einer individuellen Kanalkennung versehen wird, daß das Multiplexsignal (M, Fig. 3 u. 6) ohne das Hinzufügen einer Überrahmenkennung oder von Synchronisierzeichen gebildet wird, daß zum Wiedergewinnen der Breitbandsignale jedem Wiedergabegerät ($E_1$ bis $E_p$, Fig. 2 bzw. $E_1$ bis $E_5$, Fig. 3) ein Demultiplexer ($Demux_1$ bis $Demux_5$) zugeordnet ist, welcher zum Wiedergewinnen eines einzigen Breitbandsignales mit Hilfe eines im Demultiplexer aus dem Multiplexsignal (M) gewonnenen Empfangstaktes (TE, Fig. 4 u. 7) bemessen ist, daß ein Vergleicher (V, Fig. 4) vorgesehen ist, welcher die in dem jeweiligen wiedergewonnenen Breitbandsignal (KE, Fig. 4 u. 7) enthaltene Kanalkennung (KK, Fig. 4) mit der an einer Eingabetastatur (ET) eingegebenen Kennung des gewünschten Breitbandsignals vergleicht, daß der Vergleicher (V) mit dem zugehörigen Demultiplexer gekoppelt ist, damit bei Nichtübereinstimmung der beiden Kennungen der Empfangstakt (TE) in seiner Phasenlage soweit verändert wird bis Übereinstimmung erreicht ist.

2. Breitband-Verteil-Kommunikationssystem mit einigen Quellen ($Q_1$, $Q_2$, Fig. 1) für eine erste Anzahl Breitbandsignale ($P_1...P_k$,) welche mehreren Zentralen ($Z_1...Z_x$) zugeführt werden, wobei an jede Zentrale viele Teilnehmer ($T_1...T_y$) sternförmig über ihnen zugeordnete Anschlußleitungen ($Asl_1...Asl_y$) angeschlossen sind, wobei sich in jeder Zentrale ein Koppelfeld (KZ) befindet, an welches die erste Anzahl Breitbandsignale nach digitaler Aufbereitung herangeführt sowie die Anschlußleitungen über ihnen zugeordnete Multiplexer ($Mux_1...Mux_y$, Fig. 2) angeschlossen sind, wobei über das Koppelfeld eine zweite Anzahl (n) aus der ersten Anzahl der Breitbandsignale an die Eingänge ($KS_1...K_n$) der Multi-

plexer durchschaltbar sind, wobei die zweite Anzahl der
Breitbandsignale im Multiplexer durch bitweise Verschachtelung zu einem Multiplexsignal (M, Fig. 3) zusammengefaßt wird, welches über die betr. Anschlußleitung zu dem betr. Teilnehmer übertragen wird, wo daraus
die Breitbandsignale wiedergewonnen werden und an Wiedergabegeräten wiedergegeben werden, dadurch gekennzeichnet,
daß die digitale Aufbereitung in den Quellen ($Q_1$, $Q_2$,
Fig. 1) geschieht, daß dabei jedes Breitbandsignal ($P_1$...
$P_k$) mit einer für alle Breitbandsignale gleiche Rahmenkennung und mit einer individuellen Kanalkennung versehen wird, daß die Breitbandsignale unterschiedliche
Bitraten aufweisen, daß die höheren Bitraten ganzzahlige
Vielfache der niedrigsten Bitrate sind, daß das Multiplexsignal (M, Fig. 3 und 8) ohne das Hinzufügen einer
Überrahmenkennung oder von Synchronisierzeichen gebildet
wird, daß zum Wiedergewinnen der Breitbandsignale jedem
Wiedergabegerät ($E_1$ bis $E_p$, Fig. 2 bzw. $E_1$ bis $E_5$, Fig.
3) ein Demultiplexer ($Demux_1$ bis $Demux_5$) zugeordnet ist,
welcher zum Wiedergewinnen eines einzigen Breitbandsignales mit Hilfe eines im Demultiplexer aus dem Multiplexsignal (M) gewonnenen Empfangstaktes (TE, Fig. 4,
9 und 10) bemessen ist, daß ein Vergleicher (V, Fig. 4)
vorgesehen ist, welcher die in dem jeweiligen wiedergewonnenen Breitbandsignal (KE, Fig. 4, 9 und 10) enthaltene Kanalkennung (KK, Fig. 4) mit der an einer
Eingabetastatur (ET) eingegebenen Kennung des gewünschten Breitbandsignals vergleicht, daß der Vergleicher
(V) mit dem zugehörigen Demultiplexer gekoppelt ist,
damit bei Nichtübereinstimmung der beiden Kennungen
der Empfangstakt (TE) in seiner Phasenlage soweit verändert wird bis Übereinstimmung erreicht ist.

3. Breitband-Verteil-Kommunikationssystem mit einigen
Quellen ($Q_1$, $Q_2$, Fig. 1) für eine erste Anzahl Breitbandsignale ($P_1 \ldots P_k$) welche mehreren Zentralen ($Z_1 \ldots$
$Z_x$) zugeführt werden, wobei an jede Zentrale viele Teil-
($T_1 \ldots T_y$) sternförmig über ihnen zugeordnete Anschlußleitungen ($Asl_1 \ldots Asl_y$) angeschlossen sind, wobei sich
in jeder Zentrale ein Koppelfeld (KZ) befindet, an welches die erste Anzahl Breitbandsignale nach digitaler
bitratengleicher Aufbereitung herangeführt sowie die
Anschlußleitungen über ihnen zugeordnete Multiplexer
($Mux_1 \ldots Mux_y$, Fig. 2) angeschlossen sind, wobei über
das Koppelfeld eine zweite Anzahl (n) aus der ersten
Anzahl der Breitbandsignale an die Eingänge ($KS_1 \ldots KS_n$)
der Multiplexer durchschaltbar sind, wobei die zweite
Anzahl der Breitbandsignale im Multiplexer durch Verschachtelung zu einem Multiplexsignal (M, Fig. 3) zusammengefaßt wird, welches über die betr. Anschlußleitung zu dem betr. Teilnehmer übertragen wird, wo daraus
die Breitbandsignale wiedergewonnen werden und an
Wiedergabegeräten wiedergegeben werden <u>dadurch gekenn-
zeichnet</u>, daß die digitale bitratengleiche Aufbereitung
in den Quellen ($Q_1$, $Q_2$, Fig. 1) geschieht, daß dabei
jedes Breitbandsignal ($P_1 \ldots P_k$) mit einer für alle Breitbandsignale gleiche Rahmenkennung und mit einer individuellen Kanalkennung versehen wird, daß das Multiplexsignal (M, Fig. 3 u. 6) ohne das Hinzufügen einer Überrahmenkennung oder von Synchronisierzeichen durch wortweise Verschachtelung gebildet wird, daß zum Wiedergewinnen der Breitbandsignale jedem Wiedergabegerät ($E_1$
bis $E_p$, Fig. 2 bzw. $E_1$ bis $E_5$, Fig. 3) ein Demultiplexer
($Demux_1$, bis $Demux_5$) zugeordnet ist, welcher zum Wiedergewinnen eines einzigen Breitbandsignales mit Hilfe eines
im Demultiplexer aus dem Multiplexsignal (M) gewonnenen
Empfangstaktes (TE, Fig. 4 u. 7) bemessen ist, daß ein
Vergleicher (V, Fig. 4) vorgesehen ist, welcher die in dem jeweiligen wiedergewonnenen
Breitbandsignal (KE, Fig. 4 und 7) enthaltene Kanalkennung (KK, Fig. 4) mit der an einer Eingabetastatur (ET)
eingegebenen Kennung des gewünschten Breitbandsignals vergleicht, daß der Vergleicher (V) mit dem zugehörigen Demultiplexer gekoppelt ist, damit bei Nichtübereinstimmung
der beiden Kennungen der Empfangstakt (TE) in seiner
Phasenlage soweit verändert wird bis Übereinstimmung erreicht ist.

4. Breitband-Verteil-Kommunikationssystem mit einigen Quellen
($Q_1$, $Q_2$, Fig. 1) für eine erste Anzahl Breitbandsignale
($P_1...P_k$) welche mehreren Zentralen ($Z_1...Z_x$) zugeführt
werden, wobei an jede Zentrale viele Teilnehmer ($T_1...T_y$)
sternförmig über ihnen zugeordnete Anschlußleitungen
($Asl_1...Asl_y$) angeschlossen sind, wobei sich in jeder
Zentrale ein Koppelfeld (KZ) befindet, an welches die
erste Anzahl Breitbandsignale nach digitaler Aufbereitung herangeführt sowie die Anschlußleitungen über ihnen
zugeordnete Multiplexer ($Mux_1...Mux_y$, Fig. 2) angeschlossen
sind, wobei über das Koppelfeld eine zweite Anzahl (n)
aus der ersten Anzahl der Breitbandsignale an die Eingänge
($KS_1...KS_n$) der Multiplexer durchschaltbar sind, wobei
die zweite Anzahl der Breitbandsignale im Multiplexer
durch Verschachtelung zu einem Multiplexsignal (M, Fig. 3)
zusammengefaßt wird, welches über die betr. Anschlußleitung zu dem betr. Teilnehmer übertragen wird, wo daraus die Breitbandsignale wiedergewonnen werden und an
Wiedergabegeräten wiedergegeben werden, dadurch gekennzeichnet,daß die digitale Aufbereitung in den Quellen
($Q_1$, $Q_2$, Fig. 1) geschieht, daß dabei jedes Breitbandsignal ($P_1...P_k$) mit einer für alle Breitbandsignale
gleiche Rahmenkennung und mit einer individuellen Kanalkennung versehen wird, daß die Breitbandsignale unterschiedliche Bitraten aufweisen, daß die höheren Bitraten
ganzzahlige Vielfache der niedrigsten Bitrate sind, daß das Multiplexsignal (M, Fig. 3 und 8) ohne das Hinzufügen einer Überrahmenkennung oder von Synchronisierzeichen durch wortweise Verschachtelung gebildet wird, daß zum Wiedergewinnen der Breitbandsignale jedem Wiedergabegerät (E$_1$ bis E$_p$ Fig. 2 bzw. E$_1$ bis E$_5$, Fig. 3) ein Demultiplexer (Demux$_1$ bis Demux$_5$) zugeordnet ist, welcher zum Wiedergewinnen eines einzigen Breitbandsignales mit Hilfe eines im Demultiplexer aus dem Multiplexsignal (M) gewonnenen Empfangstaktes (TE, Fig. 4, 9 u. 10) bemessen ist, daß ein Vergleicher (V, Fig. 4) vorgesehen ist, welcher die in dem jeweiligen wiedergewonnenen Breitbandsignal (KE, Fig. 4, 9 und 10) enthaltene Kanalkennung (KK, Fig. 4) mit der an einer Eingabetastatur (ET) eingegebenen Kennung des gewünschten Breitbandsignals vergleicht, daß der Vergleicher (V) mit dem zugehörigen Demultiplexer gekoppelt ist, damit bei Nichtübereinstimmung der beiden Kennungen der Empfangstakt (TE) in seiner Phasenlage soweit verändert wird bis Übereinstimmung erreicht ist.

5. Breitband-Verteil-Kommunikationssystem nach dem Anspruch 1, 2, 3 oder 4, <u>dadurch gekennzeichnet</u>, daß für eine dritte Anzahl Breitbandsignale (S$_1$ bis S$_m$, Fig. 11, 12) unmittelbare Verbindungen von den Quellen (Q$_1$, Q$_2$, Fig. 11) zu den Eingängen (KS$_1$ bis KS$_n$, Fig. 12) der Multiplexer (Mux$_1$ bis Mux$_y$) bestehen.

1/11

**Fig. 1**

Fig. 2

Fig. 3

Fig. 4

Fig. 5

0205863

4/11

| KS$_1$ | KK$_1$ | B$_{11}$ | B$_{12}$ | KK$_1$ |
|---|---|---|---|---|
| KS$_2$ | B$_{21}$ | B$_{22}$ | KK$_2$ | B$_{21}$ |
| KS$_3$ | B$_{32}$ | KK$_3$ | B$_{31}$ | B$_{32}$ |
| KS$_4$ | KK$_4$ | B$_{41}$ | B$_{42}$ | KK$_4$ |

TS$_1$

TS$_2$

TS$_3$

TS$_4$

M | KK$_1$ | B$_{21}$ | B$_{32}$ | KK$_4$ | B$_{11}$ | B$_{22}$ | KK$_3$ | B$_{41}$ | B$_{12}$ | KK$_2$ | B$_{31}$ | B$_{42}$ | KK$_1$ | B$_{21}$ | B$_{32}$ | KK$_4$ |

*Fig.6*

0205863

M {$KK_1$|$B_{21}$|$B_{32}$|$KK_4$|$B_{11}$|$B_{22}$|$KK_3$|$B_{41}$|$B_{12}$|$KK_2$|$B_{31}$|$B_{42}$|$KK_1$|$B_{21}$|$B_{32}$|$KK_4$}

I { TE

KE { $KK_1$ | $B_{11}$ | $B_{12}$ | $KK_1$ }

II { TE

KE { $B_{21}$ | $B_{22}$ | $KK_2$ | $B_{21}$ }

III { TE

KE { $B_{32}$ | $KK_3$ | $B_{31}$ | $B_{32}$ }

IV { TE

KE { $KK_4$ | $B_{41}$ | $B_{42}$ | $KK_4$ }

Fig. 7

Fig.8

Fig. 9

0205863

Fig. 10

Fig. 11

Fig. 12

Europäisches
Patentamt

**EUROPÄISCHER RECHERCHENBERICHT**

0205863
Nummer der Anmeldung

EP 86 10 6363

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | EP-A-0 120 806 (HEINRICH-HERTZ INSTITUT)<br>* Seite 2, Zeilen 28-33; Seite 3, Zeile 22 - Seite 4, Zeile 3; Seite 6, Zeilen 2-16; Seite 7, Zeile 35 - Seite 8, Zeile 3; Seite 9, Zeilen 1-17; Seite 13, Zeile 7 - Seite 14, Zeile 19; Seite 15, Zeilen 14-16; Seite 16, Zeile 1 - Seite 17, Zeile 9; Seite 24, Zeilen 13-26; Seite 25, Zeilen 19-26; Seite 26, Zeile 21 - Seite 27, Zeile 29; Seite 36, Zeile 24 - Seite 39, Zeile 15 * | 1,2,5 | H 04 Q 11/04<br>H 04 N 7/13 |
| A | | 3,4 | |
| | --- | | |
| A | ICC' 84, IEEE INTERNATIONAL CONFERENCE ON COMMUNICATIONS, Amsterdam, NL, 14.-17. Mai 1984, Band 3, Seiten 1425-1432, North-Holland, Amsterdam, NL; H.J. MATT: "Basic concepts and possibilities for broadband-networks"<br>* Seite 1430, rechte Spalte, letzter Abschnitt * | 2,3 | RECHERCHIERTE SACHGEBIETE (Int. Cl.4)<br><br>H 04 Q<br>H 04 N<br>H 04 H |
| | ---     -/- | | |

Der vorliegende Recherchenbericht wurde für alle Patentansprüche erstellt.

| Recherchenort<br>DEN HAAG | Abschlußdatum der Recherche<br>28-08-1986 | Prüfer<br>DE MUYT H.A. |
|---|---|---|

KATEGORIE DER GENANNTEN DOKUMENTE
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82

Europäisches
Patentamt

| EINSCHLÄGIGE DOKUMENTE | | | Seite 2 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
| A | THE SIXTH INTERNATIONAL SYMPOSIUM ON SUBSCRIBERS LOOPS AND SERVICES, Nizza, FR, 1.-5. Oktober 1984, Seiten 289-293; G. HEYDT et al.: "1.12 GBIT/S optical subscriber loop for transmission of high definition television signals" * Seite 291, rechte Spalte, Zeilen 12-21; Abbildungen 3,5,6 * | 2,4 | |
| | --- | | |
| A | NACHRICHTENTECHNISCHE ZEITSCHRIFT, Band 37, Nr. 12, Dezember 1984, Seiten 778-784, Berlin, DE; H. OHNSORGE: "Bigfon und seine Nutzungsmöglichkeiten" * Seite 783, Abbildungen 11,12 * | 1-4 | |
| | --- | | |
| A,D | ANT NACHRICHTENTECHNISCHE BERICHTE, Band 1, Mai 1984, Seiten 5-12, Backnang, DE; W. SCHMIDT: "Das BIGFON-Systemkonzept Anforderungen und Aufgabenstellung" * Das ganze Dokument * | 1-5 | RECHERCHIERTE SACHGEBIETE (Int. Cl.4) |
| | --- | | |
| A,D | ANT NACHRICHTEN TECHNISCHE BERICHTE, Band 1, Mai 1984, Seiten 58-63, Backnang, DE; W. BODENSCHATZ et al.: "Breitbandmultiplexeinrichtungen" * Das ganze Dokument * | 1-5 | |
| | --- -/- | | |

Der vorliegende Recherchenbericht wurde für alle Patentansprüche erstellt.

| Recherchenort DEN HAAG | Abschlußdatum der Recherche 28-08-1986 | Prüfer DE MUYT H.A. |
|---|---|---|

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-A-3 242 580 (SIEMENS AG et al.) <br> * Seite 7, Zeile 15 - Seite 8, Zeile 4 * <br><br> ----- | 1-4 | |
| | | | **RECHERCHIERTE SACHGEBIETE (Int. Cl.4)** |

Der vorliegende Recherchenbericht wurde für alle Patentansprüche erstellt.

| Recherchenort | Abschlußdatum der Recherche | Prüfer |
|---|---|---|
| DEN HAAG | 28-08-1986 | DE MUYT H.A. |